(19) Europäisches Patentamt
European Patent Office
Office européen des brevets

(11) **EP 4 329 240 A1**

(12) **EUROPEAN PATENT APPLICATION**
published in accordance with Art. 153(4) EPC

(43) Date of publication:
**28.02.2024 Bulletin 2024/09**

(21) Application number: **21938531.7**

(22) Date of filing: **30.04.2021**

(51) International Patent Classification (IPC):
**H04L 9/08** (2006.01)      **G06F 21/60** (2013.01)

(52) Cooperative Patent Classification (CPC):
**G06F 21/602; G06F 21/60; H04L 9/0891;**
**H04L 9/3242; H04L 63/062; H04L 63/123;**
**H04L 67/12;** H04L 2012/40215; H04L 2012/40273;
H04L 2209/84

(86) International application number:
**PCT/CN2021/091653**

(87) International publication number:
**WO 2022/227057 (03.11.2022 Gazette 2022/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **ZHONG, Steven Yin**
  **Shenzhen, Guangdong 518129 (CN)**

• **WEI, Zhuo**
  **Shenzhen, Guangdong 518129 (CN)**
• **SHA, Qingdi**
  **Shenzhen, Guangdong 518129 (CN)**
• **LI, Zhen**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **KEY UPDATING METHOD AND RELATED DEVICE THEREOF**

(57)    This application provides a key updating method and a related device thereof, so that a key of an electronic control unit ECU can resist an intrusion by an attacker and maintain a vehicle in normal operation, thereby ensuring life safety of a passenger. The method in this application includes: sending a first request to a target device, where the first request is for obtaining a first identification number and a first identifier, and the first identification number is associated with the first identifier; and obtaining information of a first key corresponding to the first identifier, where the information of the first key indicates the target device to update the first key.

FIG. 3

**Description**

**TECHNICAL FIELD**

This application relates to the field of automobile technologies, and in particular, to a key updating method and a related device thereof.

**BACKGROUND**

An electronic control unit (electronic control unit, ECU) in a vehicle is an important component for controlling the vehicle. A vehicle may include a plurality of ECUs, and different ECUs are responsible for implementing different functions, such as power, vehicle doors, and steering. If an ECU suffers an intrusion by an attacker, normal operation of the vehicle is affected. At present, the core of a security protection mechanism of an ECU is to ensure security of the ECU by using a key.

When manufacturing a vehicle, a vehicle production center may write a key into each ECU in the vehicle, to ensure security of the ECU and the vehicle. After the vehicle is sold, the original key provided by the vehicle production center is continuously used for each ECU in the vehicle, to implement a corresponding function. However, as time passes, the original key used for the ECU may not resist an intrusion by an attacker, and consequently the vehicle can no longer be in normal operation. This threatens life safety of a passenger.

**SUMMARY**

Embodiments of this application provide a key updating method and a related device thereof, so that a key of an ECU can resist an intrusion by an attacker and maintain a vehicle in normal operation, thereby ensuring life safety of a passenger.

According to a first aspect of embodiments of this application, a key updating method is provided. The method includes: sending a first request to a target device, where the first request is for obtaining a first identification number and a first identifier, and the first identification number is associated with the first identifier; and obtaining information of a first key corresponding to the first identifier, where the information of the first key indicates the target device to update the first key.

To be specific, when a vehicle production center or an after-sales service center needs to update a key of a target device (which may be an ECU with a key to be updated in a vehicle) in a vehicle, the vehicle production center or the after-sales service center may first send a first request to the target device by using a key updating apparatus, so that the target device obtains, based on the first request, a vehicle identification number (vehicle identification number, VIN) of the vehicle in which the target device is located, and a unique identifier (unique identifier, UID) of the target device, which is equivalent to obtaining a first identification number and a first identifier, and sending the first identification number and the first identifier to the key updating apparatus.

After receiving the first identification number and the first identifier that are sent by the target device, the key updating apparatus associates the first identification number with the first identifier, that is, associates the target device with the vehicle in which the target device is located. Then, the key updating apparatus may obtain a first key corresponding to the first identifier, and generate information of the first key based on the first key. The first key is a key that needs to be updated by the target device.

Finally, the key updating apparatus sends the information of the first key to the target device, so that the target device parses the information of the first key to obtain the first key and completes update of the first key.

It can be learned from the foregoing method that the key updating apparatus may first send the first request to the target device in the vehicle. The first request is for obtaining the first identification number and the first identifier, and the first identification number is associated with the first identifier. After receiving the first identification number and the first identifier from the target device, the key updating apparatus obtains the information of the first key corresponding to the first identifier, and sends the information of the first key to the target device, so that the target device updates the first key based on the information of the first key.

It can be learned that the vehicle production center or the after-sales service center may enable the target device to update an original key to the first key by using the key updating apparatus. In other words, the vehicle production center or the after-sales service center may continuously update a key of the target device, to increase strength of the key of the target device, so that the key can resist an intrusion by an attacker and maintain the vehicle in normal operation, thereby ensuring life safety of a passenger.

In a possible implementation, the method further includes: obtaining, by a first server, a first check value and a second check value, where both the first check value and the second check value are generated based on the first key; and determining, when the first check value is the same as the second check value, that the first key is successfully updated. In the foregoing implementation, the key updating apparatus includes a first server and a second server. The first server may receive the first check value sent by the second server. After the target device completes key updating, the first server may further receive the second check value sent by the target device. After obtaining the second check value, the first server may compare the first check value with the second check value. If the first check value is the same as the second check value, it is determined that the key updating succeeds. If the first check value is different from the second check value, it is determined that the key updating fails.

In a possible implementation, the first check value is obtained by the second server through calculation based on the first key, and the second check value is obtained by the target device by updating the first key. In the foregoing implementation, after obtaining the first key corresponding to the first identifier, the second server may generate the information of the first key and the first check value based on the first key, and send the information of the first key and the first check value to the first server. Further, when updating the first key based on the information of the first key, the target device may further generate the second check value and send the second check value to the first server. In this way, the first server may determine, based on the first check value and the second check value, whether the key updating succeeds.

In a possible implementation, the method further includes: obtaining, by the second server, a third check value, where the third check value is obtained by the target device in a process of obtaining the first identifier; generating, when the first identifier exists in the second server and the first identifier is associated with the first identification number, a fourth check value based on the first key and the first identifier; and maintaining, when the third check value is the same as the fourth check value, an association relationship between the first identifier and the first identification number. In the foregoing implementation, if the second server determines that the first identifier already exists in a database, and the first identifier is associated with the first identification number, it indicates that the target device is associated with the vehicle in which the target device is located. Therefore, the fourth check value may be generated based on the first key corresponding to the first identifier and the first identifier, and the fourth check value may be compared with the third check value from the target device. If the fourth check value is the same as the third check value, it indicates that the first identifier is not tampered with, then the association relationship between the first identifier and the first identification number is maintained, that is, an association relationship between the target device and the vehicle in which the target device is located is maintained.

In a possible implementation, the method further includes: obtaining, by the second server, a third check value, where the third check value is obtained by the target device in a process of obtaining the first identifier; generating, when the first identifier exists in the second server and the first identifier is associated with another identification number other than the first identification number, a fourth check value based on the first key and the first identifier; and associating, when the third check value is the same as the fourth check value, the first identifier with the first identification number. In the foregoing implementation, if the second server determines that the first identifier already exists in a database, and the first identifier is associated with another identification number other than the first identification number, it indicates that the target device is associated with another vehicle. Therefore, the fourth check value may be generated based on the first key corresponding to the first identifier and the first identifier, and the fourth check value may be compared with the third check value from the target device. If the fourth check value is the same as the third check value, it indicates that the first identifier is not tampered with, then the first identifier is enabled to be associated with the first identification number, that is, the target device is enabled to be associated with the vehicle in which the target device is located.

In a possible implementation, the method further includes: obtaining, by the second server, a third check value, where the third check value is obtained by the target device in a process of obtaining the first identifier; generating, when the first identifier does not exist in the second server, a fifth check value based on a preset second key and the first identifier, where the second key corresponds to a type of the target device; and associating, when the third check value is the same as the fifth check value, the first identifier with the first identification number. In the foregoing implementation, if the second server determines that the first identifier does not exist in a database, it indicates that the target device is not associated with any vehicle. Therefore, the fifth check value may be generated based on the preset second key and the first identifier. The second key may be a temporary key (temporary key, TK). Then, the second server compares the fifth check value with the third check value from the target device. If the fifth check value is the same as the third check value, it indicates that the first identifier is not tampered with, then the first identifier is enabled to be associated with the first identification number, that is, the target device is enabled to be associated with the vehicle in which the target device is located.

In a possible implementation, the first key includes one of the following: (1) a current MEK in a master ECU key (master ecu key, MEK) linked list; (2) the current MEK and a secure onboard communication key (secure onboard communication key, SK); (3) the current MEK and a digital device authentication key (device authentication key, DK); and (4) the current MEK, the SK, and the DK.

In a possible implementation, the generating a fourth check value based on the first key and the first identifier includes: generating the fourth check value based on any MEK in the MEK linked list and the first identifier.

According to a second aspect of embodiments of this application, a key updating method is provided. The method includes the following steps.

A target device receives a first request from a first server of a key updating apparatus. The first request is for obtaining a first identification number and a first identifier, and the first identification number is associated with the first identifier.

Then, the target device may obtain, based on the first request, a VIN of a vehicle in which the target device is located and a UID of the target device, which is equivalent to obtaining the first identification number and the first identifier, and sending the first identification number and the first identifier to the first server.

Finally, the target device receives information that is of a first key corresponding to the first identifier and that is sent by the first server, and updates the first key based on the information of the first key.

It can be learned from the foregoing method that the key updating apparatus may first send the first request to the target device in the vehicle. The first request is for obtaining the first identification number and the first identifier, and the first identification number is associated with the first identifier. After receiving the first identification number and the first identifier from the target device, the key updating apparatus obtains the information of the first key corresponding to the first identifier, and sends the information of the first key to the target device, so that the target device updates the first key based on the information of the first key. It can be learned that the vehicle production center or the after-sales service center may enable the target device to update an original key to the first key by using the key updating apparatus. In other words, the vehicle production center or the after-sales service center may continuously update a key of the target device, to increase strength of the key of the target device, so that the key can resist an intrusion by an attacker and maintain the vehicle in normal operation, thereby ensuring life safety of a passenger.

In a possible implementation, the first key includes one of the following: (1) a current MEK in a MEK linked list; (2) the current MEK and an SK; (3) the current MEK and a DK; and (4) the current MEK, the SK, and the DK.

According to a third aspect of embodiments of this application, a key updating apparatus is provided. The apparatus includes: a first processing module, configured to send a first request to a target device, where the first request is for obtaining a first identification number and a first identifier, and the first identification number is associated with the first identifier; and a second processing module, configured to obtain information of a first key corresponding to the first identifier, where the information of the first key indicates the target device to update the first key.

It can be learned from the foregoing apparatus that the key updating apparatus may first send the first request to the target device in the vehicle. The first request is for obtaining the first identification number and the first identifier, and the first identification number is associated with the first identifier. After receiving the first identification number and the first identifier from the target device, the key updating apparatus obtains the information of the first key corresponding to the first identifier, and sends the information of the first key to the target device, so that the target device updates the first key based on the information of the first key. It can be learned that the vehicle production center or the after-sales service center may enable the target device to update an original key to the first key by using the key updating apparatus. In other words, the vehicle production center or the after-sales service center may continuously update a key of the target device, to increase strength of the key of the target device, so that the key can resist an intrusion by an attacker and maintain the vehicle in normal operation, thereby ensuring life safety of a passenger.

In a possible implementation, the first processing module is further configured to: obtain a first check value and a second check value, where both the first check value and the second check value are generated based on the first key; and determine, when the first check value is the same as the second check value, that the first key is successfully updated.

In a possible implementation, the first check value is obtained by the second processing module through calculation based on the first key, and the second check value is obtained by the target device by updating the first key.

In a possible implementation, the second processing module is further configured to: obtain a third check value, where the third check value is obtained by the target device in a process of obtaining the first identifier; generate, when the first identifier exists in a second server and the first identifier is associated with the first identification number, a fourth check value based on the first key and the first identifier; and maintain, when the third check value is the same as the fourth check value, an association relationship between the first identifier and the first identification number.

In a possible implementation, the second processing module is further configured to: obtain a third check value, where the third check value is obtained by the target device in a process of obtaining the first identifier; generate, when the first identifier exists in a second server and the first identifier is associated with another identification number other than the first identification number, a fourth check value based on the first key and the first identifier; and associate, when the third check value is the same as the fourth check value, the first identifier with the first identification number.

In a possible implementation, the second processing module is further configured to: obtain a third check value, where the third check value is obtained by the target device in a process of obtaining the first identifier; generate, when the first identifier does not exist in a second server, a fifth check value based on a preset second key and the first identifier, where the second key corresponds to a type of the target device; and associate, when the third check value is the same as the fifth check value, the first identifier with the first identification number.

In a possible implementation, the first key includes one of the following: a current MEK in a MEK linked list; the current MEK and an SK; the current MEK and a DK; and the current MEK, the SK, and the DK.

In a possible implementation, the second processing module is configured to generate the fourth check value based on any MEK in the MEK linked list and the first identifier.

According to a fourth aspect of embodiments of this application, a target device is provided. The device includes: a receiving module, configured to receive a first request from a first server, where the first request is for obtaining a first identification number and a first identifier, and the first identification number is associated with the first identifier; an obtaining module, configured to obtain information of a first key corresponding to the first identifier; and an update module, configured to update the first key based on the information of the first key.

In a possible implementation, the first key includes one of the following: a current MEK in a MEK linked list; the current MEK and an SK; the current MEK and a DK; and the current MEK, the SK, and the DK.

According to a fifth aspect of embodiments of this application, a key updating apparatus is provided. The key updating apparatus includes a memory and a processor.

The memory stores code, and the processor is configured to execute the code. When the code is executed, the key updating apparatus performs the method according to the first aspect or any one of the possible implementations of the first aspect.

According to a sixth aspect of embodiments of this application, a target device is provided. The target device includes a memory and a processor.

The memory stores code, and the processor is configured to execute the code. When the code is executed, the target device performs the method according to the second aspect or any one of the possible implementations of the second aspect.

According to a seventh aspect of embodiments of this application, a key updating system is provided. The system includes the key updating apparatus according to the fifth aspect and the target device according to the sixth aspect. The key updating apparatus is in a communication connection with the target device.

According to an eighth aspect of embodiments of this application, a computer storage medium is provided. The computer storage medium stores a computer program. When the program is executed by a computer, the computer is enabled to implement the method according to the first aspect, any one of the possible implementations of the first aspect, the second aspect, or any one of the possible implementations of the second aspect.

According to a ninth aspect of embodiments of this application, a computer program product is provided. The computer program product stores instructions. When the instructions are executed by a computer, the computer is enabled to implement the method according to the first aspect, any one of the possible implementations of the first aspect, the second aspect, or any one of the possible implementations of the second aspect.

According to a tenth aspect of embodiments of this application, a chip system is provided. The chip system includes a processor configured to call a computer program or computer instructions stored in a memory, so that the processor performs the method according to the first aspect, any one of the possible implementations of the first aspect, the second aspect, or any one of the possible implementations of the second aspect.

In a possible implementation, the processor is coupled to the memory through an interface.

In a possible implementation, the chip system further includes a memory, and the memory stores a computer program or computer instructions.

According to an eleventh aspect of embodiments of this application, a processor is provided. The processor is configured to call a computer program or computer instructions stored in a memory, so that the processor performs the method according to the first aspect, any one of the possible implementations of the first aspect, the second aspect, or any one of the possible implementations of the second aspect.

In embodiments of this application, the key updating apparatus may first send the first request to the target device in the vehicle. The first request is for obtaining the first identification number and the first identifier, and the first identification number is associated with the first identifier. After receiving the first identification number and the first identifier from the target device, the key updating apparatus obtains the information of the first key corresponding to the first identifier, and sends the information of the first key to the target device, so that the target device updates the first key based on the information of the first key. It can be learned that the vehicle production center or the after-sales service center may enable the target device to update an original key to the first key by using the key updating apparatus. In other words, the vehicle production center or the after-sales service center may continuously update a key of the target device, to increase strength of the key of the target device, so that the key can resist an intrusion by an attacker and maintain the vehicle in normal operation, thereby ensuring life safety of a passenger.

**BRIEF DESCRIPTION OF DRAWINGS**

FIG. 1 is a schematic diagram of a structure of a key updating system according to an embodiment of this application;

FIG. 2 is a schematic flowchart of a key updating method according to an embodiment of this application;

FIG. 3 is another schematic flowchart of a key updating method according to an embodiment of this application;

FIG. 4 is a schematic flowchart of associating a UID with a VIN by a second server according to an embodiment of this application;

FIG. 5 is a schematic diagram of a structure of a key updating apparatus according to an embodiment of this application;

FIG. 6 is a schematic diagram of a structure of a target device according to an embodiment of this application;

FIG. 7 is another schematic diagram of a structure of a key updating apparatus according to an embodiment of this application; and

FIG. 8 is another schematic diagram of a structure of a target device according to an embodiment of this application.

## DESCRIPTION OF EMBODIMENTS

The following describes in detail technical solutions in embodiments of this application with reference to the accompanying drawings in embodiments of this application.

In the specification, claims, and accompanying drawings of this application, the terms "first", "second", and so on are intended to distinguish between similar objects but do not necessarily indicate a specific order or sequence. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into modules in this application is merely logical division and may be other division in actual implementation. For example, a plurality of modules may be combined or integrated into another system, or some features may be omitted or not performed. In addition, connection, coupling, or communication in this application may be direct connection, coupling, or communication between associated objects, or indirect connection, coupling, or communication by using another apparatus. In addition, the connection, coupling, or communication between the objects may be in an electrical form or another similar form. This is not limited in this application. Independently described modules or submodules may be physically separated, or may not be physically separated, or may be implemented by software or hardware. In addition, some modules or submodules may be implemented by software, and a processor calls the software to implement functions of these modules or submodules. Some other modules or submodules are implemented by hardware, for example, implemented by using a hardware circuit. In addition, some or all of the modules may be selected according to an actual requirement to achieve the objectives of the solutions of this application.

"A plurality of" means two or more than two. The term "and/or" describes an association relationship between associated objects and indicates that three relationships may exist. For example, A and/or B may indicate the following three cases: Only A exists, both A and B exist, and only B exists.

With the development of technologies, automobiles have become an indispensable means of transportation in people's daily life. An electronic control unit (electronic control unit, ECU) in a vehicle is an important component for controlling the vehicle. A vehicle may include a plurality of ECUs, and different ECUs are responsible for implementing different functions, such as power, vehicle doors, and steering. If an ECU suffers an intrusion by an attacker, a vehicle in normal operation will be affected. At present, the core of a security protection mechanism of an ECU is to ensure the security of the ECU by using a key.

When manufacturing a vehicle, a vehicle production center may write a key to each ECU in the vehicle, to ensure security of the ECU and the vehicle. After the vehicle is sold, the original key provided by the vehicle production center is continuously used for each ECU in the vehicle, to implement a corresponding function. However, as time passes, the original key used for the ECU may not resist an intrusion by an attacker, and consequently the vehicle can no longer be in normal operation, further threatening life safety of a passenger.

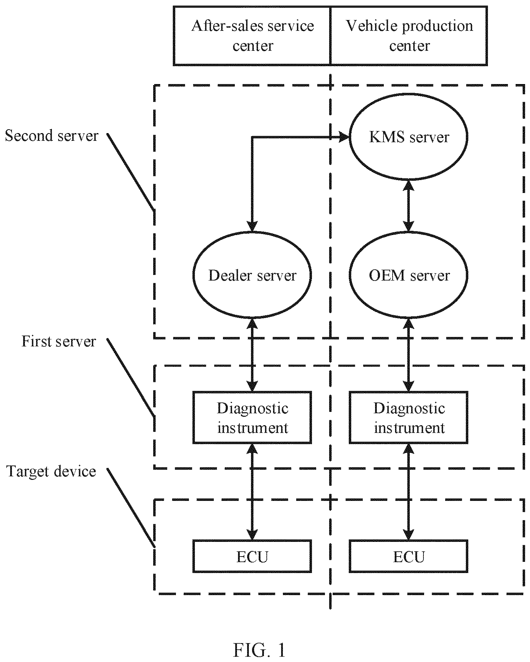

To resolve the foregoing problem, an embodiment of this application provides a key updating method. The method is applicable to a key updating system. FIG. 1 is a schematic diagram of a structure of a key updating system according to an embodiment of this application. As shown in FIG. 1, the system includes a target device deployed in a vehicle and a key updating apparatus deployed in a back end (or outside the vehicle), and the target device is in a communication connection with the key updating apparatus. The key updating apparatus may include a first server and a second server. The first server and the second server may be deployed in a same physical machine, or may be deployed in different physical machines. The second server may be connected to the target device by the first server, so that information exchange can be implemented between the second server and the target component.

The following briefly describes the target device, the first server, and the second server.

In the vehicle, the target device is usually an ECU with a key to be updated. The ECU may be an ECU newly added to the vehicle, or may be an old ECU that has been disposed in the vehicle, or the like. This is not limited herein.

Outside the vehicle, the back end usually refers to a vehicle production center, or a combination of an after-sales service center and a vehicle production center that are of the vehicle. Regardless of whether the back end is the vehicle production center or the combination of the after-sales service center or the vehicle production center, the first server may be presented in a form of a diagnostic instrument, that is, the second server may be connected, by the diagnostic instrument, to the ECU with the key to be updated. It should be understood that the foregoing example is schematically described only by using a diagnostic instrument as the first server. The second server may alternatively be connected to the ECU by using another tool, which does not limit a type of the first server in embodiments of this application.

When the back end is a vehicle production center, the second server may include a key management system (key management system, KMS) server and an original equipment manufacturer (original equipment manufacturer, OEM) server, and the two servers may be in communication with each other. When the back end is a combination of an after-sales service center and a vehicle production center, the second server may include a dealer (dealer) server located on the after-sales service center side and a KMS server located on the vehicle production center side, and the two servers may be in communication with each other. It should be noted that the dealer server, the KMS server, and the OEM server may be different physical machines, or may be cloud instances, such as a virtual machine (virtual machine, VM) and a docker (docker), deployed on a same physical machine (or different physical machines). This is not limited herein.

The KMS server is configured to generate, store, and manage a key of each ECU, for example, a MEK, a TK, an SK, or a DK of each ECU. The diagnostic instrument may request a key from the KMS server through the OEM server (or the dealer server). The KMS may deliver a key to the diagnostic instrument through the OEM server (or the dealer server), so that the diagnostic instrument writes the key to the ECU and verifies whether the key is successfully updated.

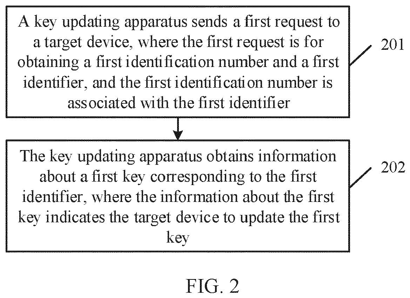

To further understand the foregoing process, the following describes the foregoing process in detail with reference to FIG. 2. FIG. 2 is a schematic flowchart of a key updating method according to an embodiment of this application. The method includes the following steps.

201. A key updating apparatus sends a first request to a target device, where the first request is for obtaining a first identification number and a first identifier, and the first identification number is associated with the first identifier.

When a back end needs to update a key of a target device in a vehicle (for example, write a key into a new ECU in the vehicle, or update a key of an old ECU in the vehicle), the back end may first send the first request to the target device by using the key updating apparatus, so that the target device obtains, based on the first request, a VIN of the vehicle in which the target device is located, and a UID of the target device, which is equivalent to obtaining the first identification number and the first identifier; and sends information including the first identification number and the first identifier to the key updating apparatus.

After receiving the first identification number and the first identifier that are sent by the target device, the key updating apparatus associates the first identification number with the first identifier (which may also be understood as binding the first identification number to the first identifier), that is, associates the target device with the vehicle in which the target device is located. Then, the key updating apparatus may obtain a first key corresponding to the first identifier, and generate information of the first key based on the first key. The first key is a key that needs to be updated by the target device. There may be a plurality of keys that need to be updated by the target device, such as a MEK, an SK, and a DK.

202. The key updating apparatus obtains the information of the first key corresponding to the first identifier, where the information of the first key indicates the target device to update the first key.

After obtaining the information of the first key, the key updating apparatus sends the information of the first key to the target device, so that the target device parses the information of the first key to obtain the first key, and updates an originally stored key to the first key.

In this embodiment of this application, the key updating apparatus may first send the first request to the target device in the vehicle. The first request is for obtaining the first identification number and the first identifier, and the first identification number is associated with the first identifier. After receiving the first identification number and the first identifier from the target device, the key updating apparatus obtains the information of the first key corresponding to the first identifier, and sends the information of the first key to the target device, so that the target device updates the first key based on the information of the first key. It can be learned that the vehicle production center or the after-sales service center may enable the target device to update an original key to the first key by using the key updating apparatus. In other words, the vehicle production center or the after-sales service center may continuously update a key of the target device, to increase strength of the key of the target device, so that the key can resist an intrusion by an attacker and maintain the vehicle in normal operation, thereby ensuring life safety of a passenger.

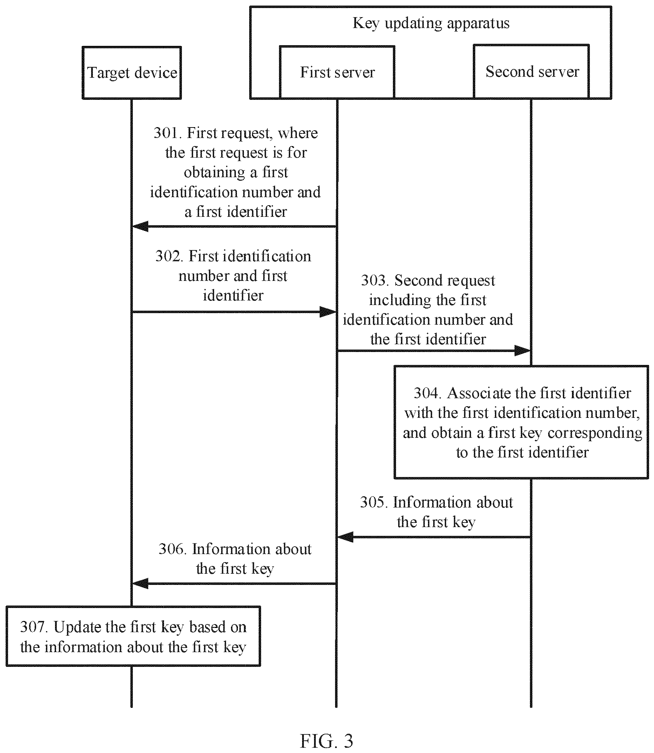

To further understand the key updating method provided in this embodiment of this application, the following further describes the key updating method provided in this embodiment of this application with reference to FIG. 3. FIG. 3 is another schematic flowchart of a key updating method according to an embodiment of this application. As shown in FIG. 3, the method includes the following steps.

301. A first server sends a first request to a target device, where the first request is for obtaining a first identification number and a first identifier.

When a back end needs to update a key of a target component in a vehicle (for example, write a key to a new ECU in the vehicle, or update a key of an old ECU in the vehicle), the back end may send the first request to the target device by using the first server. The first request indicates the target device to send a VIN (namely, the first identification number) of the vehicle in which the target component is located, and a UID (namely, the first identifier) of the target device. Generally, the first request may be transmitted between the first server and the target device based on a unified diagnostic services (unified diagnostic services, UDS) protocol, that is, a format of the first request satisfies a requirement of the UDS protocol.

It should be noted that information including a type of the target device is preset in the first server. For example, when keys of an ECU 1, an ECU 2, and an ECU 3 need to be updated, information including a type of the ECU 1, a type of the ECU 2, and a type of the ECU 3 is preset in the first server. Information including a type of an ECU may be preset in the first server by a second server, or may be manually preset in the first server. This is not limited herein. It can be learned that when the first server sends the first request to the target device, the first server has determined a type of the target device.

302. The first server receives the first identification number and the first identifier from the target device.

For example, after receiving the first request, the target device may directly read, based on the first request, the VIN of the vehicle in which the target device is located. In addition, the target device may further call a function CMD_RND in a communication protocol, and generate a random number based on CMD_RND, which is denoted as CHALLENGE (challenge value). Then, the target device may further call a function CMD_GET_ID, and use CHALLENGE as an input of CMD_GET_ID, to obtain information including a UID of the target device, a status register (status register, SREG) of the target device, and a message authentication code (message authentication code, MAC) 1 (namely, a third check value).

After obtaining the information including the VIN of the vehicle in which the target device is located, the UID of the target device, the CHALLENGE, the SREG, and the MAC 1, the target device may send the information including the VIN of the vehicle in which the target device is located, the UID of the target device, the SREG, and the MAC 1 to the first server based on the UDS protocol.

303. The first server sends a second request including the first identification number and the first identifier to a second server.

After receiving the information including the VIN of the vehicle in which the target device is located, the UID of the target device, the CHALLENGE, the SREG, and the MAC 1, which is equivalent to determining specific information about the target device, the first server may request a key of the target device from the second server. Specifically, the first server may generate the second request including the information such as the type of the target device, the VIN of the vehicle in which the target device is located, the UID of the target device, the CHALLENGE, the SREG, and the MAC 1, and send the second request to the server.

304. The second server associates the first identifier with the first identification number, and obtains a first key corresponding to the first identifier.

After receiving the second request, the second server may parse the second request to obtain the information including the type of the target device, the VIN of the vehicle in which the target device is located, the UID of the target device, the CHALLENGE, the SREG, and the MAC 1. The second server has a database. The database records an association relationship between a device and a vehicle, that is, an association relationship between a UID of the device and a VIN of the vehicle. For ease of understanding the foregoing association relationship, the following describes, with reference to Table 1 and Table 2, an association relationship that is between a device and a vehicle and that is recorded in the database, as shown in Table 1 and Table 2.

**Table 1**

| Vehicle 1 | ECU 1 | ECU 2 | ... | ECU n |
|-----------|-------|-------|-----|-------|
| VIN 1 | UID 1 | UID 2 | ... | UID n |

**Table 2**

| Vehicle 2 | ECU n+1 | ECU n+2 | ... | ECU m |
|-----------|---------|---------|-----|-------|
| VIN 2 | UID n+1 | UID n+2 | ... | UID m |

It can be learned from Table 1 and Table 2 that information about a vehicle 1 and a vehicle 2 is recorded in the database of the second server. The vehicle 1 is associated with an ECU 1, ..., and an ECU n, and the vehicle 2 is associated with an ECU n+1, ..., and an ECU m. To be specific, a VIN 1 (a VIN of the vehicle 1) is associated with a UID 1 (a UID of the ECU 1), ..., and a UID n (a UID of the ECU n), and a VIN 2 (a VIN of the vehicle 2) is associated with a UID n+1 (a UID of the ECU n+1), ..., and a UID m (a UID of the ECU m).

Therefore, the second server may traverse the database to determine whether the UID of the target device exists in the database. If it is determined that the UID exists, it indicates that the UID has been associated with a VIN, that is, the target device has been associated with a vehicle. If it is determined that the UID of the target device does not exist, it indicates that the UID is not associated with any VIN, that is, the target device is not associated with any vehicle. Regardless of whether the UID exists in the database, the second server associates the UID with the VIN of the vehicle in which the target device is located, to complete association between the target device and the vehicle in which the target device is located.

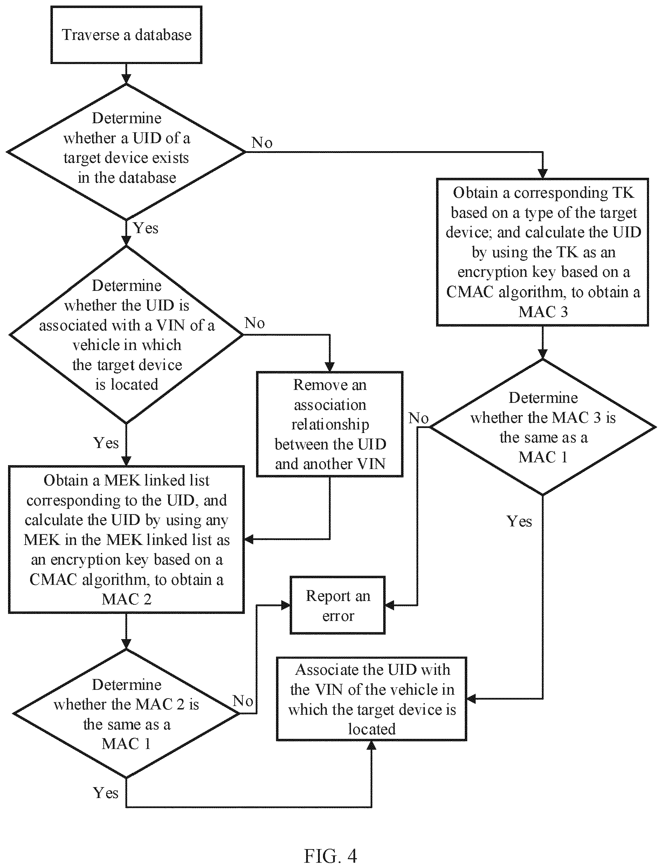

To further understand the foregoing process, the following describes the foregoing process with reference to FIG. 3. FIG. 4 is a schematic flowchart of associating a UID with a VIN by a second server according to an embodiment of this application. As shown in FIG. 4, the second server first traverses a database to determine whether a UID of a target device exists in the database. The following several cases may occur:

(1) If it is determined that the UID already exists, the second server determines whether the UID is associated with a VIN of a vehicle in which the target device is located.

(1.1) If the second server determines that the UID has been associated with the VIN of the vehicle in which the target device is located, it indicates that the target device has been associated with the vehicle in which the target device is located. Therefore, the second server may check the UID to determine whether the UID is tampered with during transmission. Specifically, the second server may first obtain a MEK linked list corresponding to the UID. The MEK linked list includes a plurality of MEKs, including a current MEK (which may also be understood as a latest MEK, that is, a MEK to be written to the target device), a first MEK (which may also be understood as an old MEK) before the current MEK, a second MEK before the current MEK, and the like. In this case, the second server calculates the UID by using any MEK in the MEK linked list as an encryption key based on a cipher-based message authentication code (cipher-based message authentication code, CMAC) algorithm, to obtain a MAC 2 (namely, a fourth check value). A calculation formula of the MAC 2 is as follows:

$$MAC_{MEK} = CMAC_{MEK} (CHALLENGE|UID|SREG)$$

Then, "|" indicates that several pieces of information are combined in series to obtain new information. The second server may determine whether the MAC 2 is the same as the MAC 1. If the MAC 2 is the same as the MAC 1, it indicates that the UID is not tampered with, then an association relationship between the UID and the VIN of the vehicle in which the target device is located is maintained, which is equivalent to maintaining an association relationship between the target device and the vehicle in which the target device is located. If the MAC 2 is different from the MAC 1, it indicates that the UID is tampered with, then an error is reported.

To further understand the process of calculating the MAC 2 and the process of checking the MAC 2, the following provides a schematic description with reference to a specific example. For example, the second server may first calculate, in the MEK linked list, the UID by using a current MEK as an encryption key based on the CMAC algorithm, to obtain a MAC 2. Then, the second server may compare the MAC 2 with the MAC 1. If the MAC 2 is the same as the MAC 1, it is determined that the UID is not tampered with. If the MAC 2 is different from the MAC 1, a first MEK before the current MEK is obtained, and the UID is calculated by using the MEK as an encryption key based on the CMAC algorithm, to obtain a MAC 2. The MAC 2 is compared with the MAC 1, until the MAC 2 is the same as the MAC 1. If a MAC 2 calculated based on each MEK in the MEK linked list is different from the MAC 1, it is determined that the UID is tampered with, and an error is reported.

(1.2) If the second server determines that the UID has been associated with another VIN other than the VIN of the vehicle in which the target device is located, it indicates that the target device has been associated with another vehicle. Therefore, the second server removes an association relationship between the UID and the another VIN, and checks the UID, to determine whether the UID is tampered with during transmission. Specifically, the second server may first obtain a MEK linked list corresponding to the UID. The MEK linked list includes a plurality of MEKs, including a current MEK, a first MEK before the current MEK, a second MEK before the current MEK, and the like. In this case, the second server calculates the UID by using any MEK in the MEK linked list as an encryption key based on the CMAC algorithm, to obtain a MAC 2. Then, the second server may determine whether the MAC 2 is the same as the MAC 1. If the MAC 2 is the same as the MAC 1, it indicates that the UID is not tampered with, then the UID is reassociated with the VIN of the vehicle in which the target device is located, which is equivalent to associating the target device with the vehicle in which the target device is located. If the MAC 2 is different from the MAC 1, it indicates that the UID is tampered with, then an error is reported.

For the process of calculating the MAC 2 and the process of checking the MAC 2, refer to a related description part of the example shown in (1.1). Details are not described herein again.

(2) If it is determined that the UID does not exist, it indicates that the target device has not been associated with any vehicle, then the second server checks the UID to determine whether the UID is tampered with during transmission. Specifically, the second server may first obtain a corresponding TK (namely, a second key) based on a type of the target device. Then, the UID is calculated by using the TK as an encryption key based on the CMAC algorithm, to obtain a MAC 3 (namely, a fifth check value). A calculation formula of the MAC 3 is as follows:

$$MAC_{TK} = CMAC_{TK} (CHALLENGE|UID|SREG)$$

Then, the second server may determine whether the MAC 3 is the same as the MAC 1. If the MAC 3 is the same as the MAC 1, it indicates that the UID is not tampered with, then the UID is associated with the VIN of the vehicle in which the target device is located, which is equivalent to associating the target device with the vehicle in which the target device is located. If the MAC 3 is different from the MAC 1, it indicates that the UID is tampered with, then an error is reported.

After associating the UID of the target device with the VIN of the vehicle in which the target device is located, the second server may obtain, from the database, a key (namely, a first key) that needs to be written into the target device. The following schematically describes the foregoing process with reference to Table 3, as shown in Table 3.

**Table 3**

| UID | MEK | SK | DK |
|---|---|---|---|
| UID 1 | {ID, AuthID, $C_{ID}$, $Key_{ID}$}, that is, {1, 1, $C_1$, MEK linked list} | {ID, AuthID, $C_{ID}$, $Key_{ID}$}, that is, {4, 1, $C_4$, SK1} | {ID, AuthID, $C_{ID}$, $Key_{ID}$}, that is, {5, 1, $C_5$, DK1} |

Based on Table 3, it can be learned that $Key_{ID}$, ID, $C_{ID}$ (counter value), and AuthID that correspond to a UID 1 are recorded in the database of the second server. When ID is different, corresponding $Key_{ID}$ is different keys. For example, when ID = 1, a value of $Key_{ID}$ is obtained from the MEK linked list, that is, $Key_{ID}$ = current MEK in the MEK linked list. When ID = 4, $Key_{ID}$ = SK1 (which may also be understood as a latest SK). When ID = 5, $Key_{ID}$ = DK1 (which may also be understood as a latest DK). In addition, AuthID is 1 regardless of a value of ID. $C_1$, $C_4$, and $C_5$ are different values of a counter, and may be used to prevent a replay attack.

It can be learned that after associating the UID of the target device with the VIN of the vehicle in which the target device is located, the second server may obtain $Key_{ID}$, ID, $C_{ID}$, and AuthID that correspond to the UID. In an actual application, the key that needs to be written to the target device may include a plurality of combinati ons. For example, if a key that needs to be written to an ECU is a MEK, the second server obtains, from the database, only ID = 1, AuthID = 1, $C_1$, and $Key_{ID}$ = current MEK. In another example, if keys that need to be written to an ECU are a MEK and an SK, the second server obtains two groups of information from the database. One group is ID = 1, AuthID = 1, $C_1$, and $Key_{ID}$ = current MEK, and the other group is ID = 4, AuthID = 1, $C_4$, and $Key_{ID}$ = SK1. In still another example, if keys that need to be written to an ECU are a MEK and a DK, the second server obtains two groups of information from the database. One group is ID = 1, AuthID = 1, $C_1$, and $Key_{ID}$ = current MEK, and the other group is ID = 5, AuthID = 1, $C_5$, and $Key_{ID}$ = SK1. In yet still another example, if keys that need to be written to an ECU are a MEK, an SK, and a DK, the second server obtains three groups of information from the database. A first group is ID = 1, AuthID = 1, $C_1$, and $Key_{ID}$ = current MEK, a second group is ID = 4, AuthID = 1, $C_4$, and $Key_{ID}$ = SK1, and a third group is ID = 5, AuthID = 1, $C_5$, and $Key_{ID}$ = SK1.

It should be understood that for the foregoing example (1), the UID of the target device exists in the database, so $Key_{ID}$, ID, $C_{ID}$, and AuthID that correspond to the UID can be directly obtained. For the foregoing example (2), the UID does not exist in the database, so $Key_{ID}$, ID, $C_{ID}$, and AuthID that correspond to the UID do not exist in the database. Therefore, in the example (2), the second server may generate, by using the database, $Key_{ID}$, ID, $C_{ID}$, and AuthID that correspond to the UID, to obtain such information.

It should be further understood that the foregoing key written to the target device includes a MEK, an SK, and a DK, which does not constitute a limitation on the type of the key written to the target device in this embodiment, and may be another key other than the MEK, the SK, and the DK.

It should be further understood that, in this embodiment, a check value may be calculated based on the CMAC algorithm, or a check value may be calculated based on another encryption algorithm, which does not constitute a limitation on the encryption algorithm in this embodiment.

305. The second server sends information of the first key to the first server.

After obtaining $Key_{ID}$, ID, $C_{ID}$, and AuthID that correspond to the UID, the second server may generate M1, M2, M3, M4, and M5 (where M1, M2, and M3 are information of the first key, and M5 is the first check value) based on such information.

For ease of description, an example in which the key that needs to be written to the target device is only a MEK is used for description. Therefore, the second server may obtain, from the database, a group of information: ID = 1, AuthID = 1, $C_1$, and $Key_{ID}$ = current MEK. Based on such information, the second server may first generate K1, K2, K3, and K4 based on a key derivation function KDF of the State Cryptography Administration SM2 algorithm. K1 and K2 are generated based on KeyAuthID, and K3 and K4 are generated based on KeyID. Calculation formulas of K1 to K4 are as follows:

$$K1 = KDF(KEY_{AuthID}, KEY\_UPDATE\_ENC\_C)$$

$$K2 = KDF(KEY_{AuthID}, KEY\_UPDATE\_MAC\_C)$$

$$K3 = KDF(KEY_{ID}, KEY\_UPDATE\_ENC\_C)$$

$$K4 = KDF(KEY_{ID}, KEY\_UPDATE\_MAC\_C)$$

In the foregoing formulas, AuthID = 1, so it can be learned from Table 3 that a value of $KEY_{AuthID}$ can be obtained from the MEK linked list. The MEK linked list includes a plurality of MEKs. For the foregoing example (1.1) and example (1.2), if it is determined that a MAC 2 generated based on a MEK is the same as the MAC 1, $KEY_{AuthID}$ is the MEK. For the foregoing example (2), $KEY_{AuthID}$ is a current MEK in the MEK linked list (because the MEK linked list is newly generated, the MEK linked list includes only one latest MEK, namely, the current MEK). KEY UPDATE ENC C and KEY_UPDATE_MAC_C are preset constants.

After K1 to K4 are obtained, M1 to M5 may be generated based on K1 to K4. Calculation formulas of M1 to M5 are as follows:

$$M1 = UID|ID|AuthID$$

$$M2 = ENC_{CBC, K1, IV = 0}(C_{ID}|"0...0"_5|"0...0"_{95}|KEY_{ID})$$

$$M3 = CMAC_{K2}(M1|M2)$$

$$M4^* = ENC_{ECB, K3}(C_{ID})$$

$$M4 = UID|ID|AuthID|M4^*$$

$$M5 = CMAC_{K4}(M4)$$

In the foregoing formula, M1 is obtained by combining UID, ID, and AuthID in series. M2 is obtained by combining $C_{ID}$, $F_{ID}$ (namely, the 95 zeros in the foregoing formula), and $KEY_{ID}$ in series, and encrypting, in a cipher block chaining (cipher block chaining, CBC) mode, a value obtained through the combination in series by using K1 as an encryption key. M3 is obtained by combining M1 and M2 in series, and calculating a value obtained through the combination in series based on the CMAC algorithm by using K2 as an encryption key. M4* is obtained by encrypting $C_{ID}$ in an electronic code book (Electronic Code Book, ECB) mode by using K3 as an encryption key. M4 is obtained by combining UID, ID, AuthID, and M4* in series. M5 is obtained by calculating M4 based on the CMAC algorithm by using K4 as an encryption key.

In this way, the second server may obtain a group of M1 to M5. It should be understood that if the key that needs to be written to the target device further includes an SK, the second server may further obtain, from the database, information corresponding to the SK, and generate another group of M1 to M5 based on the information (for a generation process, refer to the foregoing related descriptions, and details are not described herein again). Similarly, if the key that needs to be written to the target device further includes a DK, the second server may further obtain, from the database, information corresponding to the DK, and generate another group of M1 to M5 based on the information. It can be learned that if the key that needs to be written to the target device includes only a MEK, the second server may obtain one group of M1 to M5; if the key that needs to be written to the target device includes a MEK and an SK (which may alternatively be a MEK and a DK), the second server may obtain two groups of M1 to M5; and if the key that needs to be written to the target device includes a MEK, an SK, and a DK, the second server may obtain three groups of M1 to M5. Subsequent details are not described again.

After obtaining M1 to M5, the second server may send M1 to M5 to the first server.

306. The first server sends the information of the first key to the target device.

After obtaining M1 to M5, the first server may reserve M4 and M5, and send M1 to M3 to the target device.

It should be understood that this embodiment is schematically described only by using an example in which the first server and the second server are deployed in different physical machines. Correspondingly, that the second server may send M1 to M3 to the target device by using the first server is also an example for description, and does not constitute a limitation on a manner of sending, by a key updating apparatus, M1 to M3 to the target device in this embodiment. For example, when the first server and the second server are deployed in a same physical machine (which is equivalent to that the first server and the second server are a same physical machine), the second server may directly send M1 to M3 to the target device.

307. The target device updates the first key based on the information of the first key.

After receiving M1 to M3, the target device may call a function CMD_LOAD_KEY in a communication protocol. Based on the function, the target device can implement the following functions: (1) Parse M1 and M2 to obtain information including ID and $KEY_{ID}$. (2) Check whether content of M1 and M2 is tampered with by using M3. If it is determined that the content is not tampered with, corresponding $KEY_{ID}$ may be updated based on ID, to complete key updating. (3) Calculate M5' (namely, the second check value) after the key updating is completed, and return M5' to the first server, so that the first server verifies, based on M5', whether the key updating succeeds.

To further understand the foregoing process, the following further describes the foregoing process with reference to Table 4. In the AUTOSAR protocol, a storage address of a key in an ECU is shown in Table 4.

**Table 4**

| Key name | Storage address |
| --- | --- |
| secret key | 0x0 |
| master ecu key | 0x1 |
| boot mac key | 0x2 |
| boot mac | 0x3 |
| key 1 | 0x4 |
| key 2 | 0x5 |
| key 3 | 0x6 |
| key 4 | 0x7 |
| key 5 | 0x8 |
| key 6 | 0x9 |
| key 7 | 0xa |
| key 8 | 0xb |
| key 9 | 0xc |
| key 10 | 0xd |
| ram key | 0xe |

In Table 4, the storage address 0x1 corresponds to ID = 1, the storage address 0x4 corresponds to ID = 4, and the storage address 0x5 corresponds to ID = 5. In this case, in a memory of the ECU, a storage region corresponding to the storage address 0x1 is used to store a MEK. A storage region corresponding to the storage address 0x4 is used to store an SK. A storage region corresponding to the storage address 0x5 is used to store a DK.

It can be learned that after obtaining ID and $KEY_{ID}$, the target device may write $KEY_{ID}$ to a corresponding storage region based on a value of ID, to complete key updating. For example, if the target device obtains information: ID = 1, $KEY_{ID}$ = current MEK, ID = 4, and $KEY_{ID}$ = SK1, which is equivalent to that the ECU obtains a latest MEK and SK. Therefore, the ECU may write the current MEK and SK1 to corresponding storage regions respectively based on ID = 1 and ID = 4, to complete writing or updating of the key, that is, complete key updating.

After completing the key updating, the target device may further generate M5' (for a generation process, refer to the generation process of M5, and details are not described herein again), and return M5' to the first server. The first server compares M5' with M5. If M5' is the same as M5, it is determined that the key updating succeeds. If M5' is different from M5, it is determined that the key updating fails, and an error is reported.

In this embodiment of this application, the key updating apparatus may first send the first request to the target device in the vehicle. The first request is for obtaining the first identification number and the first identifier, and the first identification number is associated with the first identifier. After receiving the first identification number and the first identifier from the target device, the key updating apparatus obtains the information of the first key corresponding to the first identifier, and sends the information of the first key to the target device, so that the target device updates the first key based on the information of the first key. It can be learned that the vehicle production center or the after-sales service center may enable the target device to update an original key to the first key by using the key updating apparatus. In other words, the vehicle production center or the after-sales service center may continuously update a key of the target device, to increase strength of the key of the target device, so that the key can resist an intrusion by an attacker and maintain the vehicle in normal operation, thereby ensuring life safety of a passenger.

Further, in this embodiment of this application, the after-sales service center and the vehicle production center may update the key in the target device with a unified and simple standardized procedure in various scenarios (for example, a scenario in which a key is written to a new ECU in a vehicle, or a scenario in which a key of an old ECU in a vehicle is updated), to ensure security of the target device.

Further, keys including a MEK, an SK, and a DK are controlled by only two entities: the key updating apparatus and the target device. Encryption protection is performed on the key updating apparatus, and decryption and update are performed on the target device, thereby implementing end-to-end key security protection.

Further, after the target device completes key updating, the first server (for example, a diagnostic instrument) verifies whether the key updating succeeds. In this case, the first server may be disconnected from the second server, that is, the first server may complete verification of the key updating offline, which reduces dependency on the second server, thereby improving stability and reliability of the entire process.

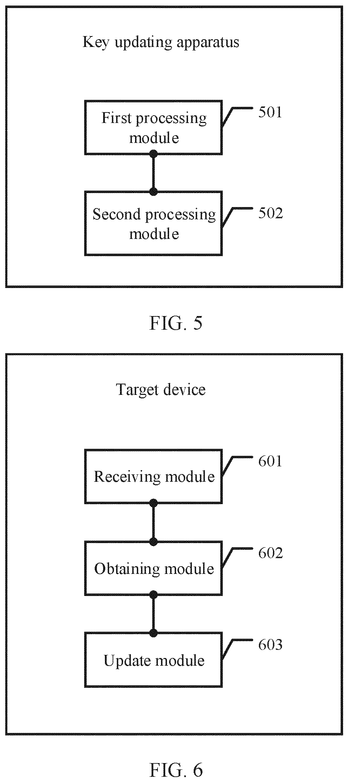

The foregoing describes in detail the key updating method provided in embodiments of this application, and the following describes a key updating apparatus provided in embodiments of this application. FIG. 5 is a schematic diagram of a structure of a key updating apparatus according to an embodiment of this application. As shown in FIG. 5, the apparatus includes: a first processing module 501 and a second processing module 502.

The first processing module 501 is configured to send a first request to a target device. The first request is for obtaining a first identification number and a first identifier, and the first identification number is associated with the first identifier. The first processing module 501 may be the first server.

The second processing module 502 is configured to obtain information of a first key corresponding to the first identifier. The information of the first key indicates the target device to update the first key. The second processing module 502 may be the second server.

In a possible implementation, the first processing module 501 is further configured to: obtain a first check value and a second check value, where both the first check value and the second check value are generated based on the first key; and determine, when the first check value is the same as the second check value, that the first key is successfully updated.

In a possible implementation, the first check value is obtained by the second processing module 502 through calculation based on the first key, and the second check value is obtained by the target device by updating the first key.

In a possible implementation, the second processing module 502 is further configured to: obtain a third check value, where the third check value is obtained by the target device in a process of obtaining the first identifier; generate, when the first identifier exists in the second server and the first identifier is associated with the first identification number, a fourth check value based on the first key and the first identifier; and maintain, when the third check value is the same as the fourth check value, an association relationship between the first identifier and the first identification number.

In a possible implementation, the second processing module 502 is further configured to: obtain a third check value, where the third check value is obtained by the target device in a process of obtaining the first identifier; generate, when the first identifier exists in the second server and the first identifier is associated with another identification number other than the first identification number, a fourth check value based on the first key and the first identifier; and associate, when the third check value is the same as the fourth check value, the first identifier with the first identification number.

In a possible implementation, the second processing module 502 is further configured to: obtain a third check value, where the third check value is obtained by the target device in a process of obtaining the first identifier; generate, when the first identifier does not exist in the second server, a fifth check value based on a preset second key and the first identifier, where the second key corresponds to a type of the target device; and associate, when the third check value is the same as the fifth check value, the first identifier with the first identification number.

In a possible implementation, the first key includes one of the following: a current MEK in a MEK linked list; the current MEK and an SK; the current MEK and a DK; and the current MEK, the SK, and the DK.

In a possible implementation, the second processing module 502 is configured to generate the fourth check value based on any MEK in the MEK linked list and the first identifier.

FIG. 6 is a schematic diagram of a structure of a target device according to an embodiment of this application. As shown in FIG. 6, the device includes: a receiving module 601, an obtaining module 602, and an update module 603.

The receiving module 601 is configured to receive a first request from a first server. The first request is for obtaining a first identification number and a first identifier, and the first identification number is associated with the first identifier.

The obtaining module 602 is configured to obtain information of a first key corresponding to the first identifier.

The update module 603 is configured to update the first key based on the information of the first key.

In a possible implementation, the first key includes one of the following: a current MEK in a MEK linked list; the current MEK and an SK; the current MEK and a DK; and the current MEK, the SK, and the DK.

It should be noted that content such as information exchange between the modules/units of the apparatus and the execution processes thereof is based on the same idea as that of the method embodiments of this application, and produces the same technical effects as that of the method embodiments of this application. For specific content, refer to the foregoing descriptions in the method embodiments of this application. Details are not described herein again.

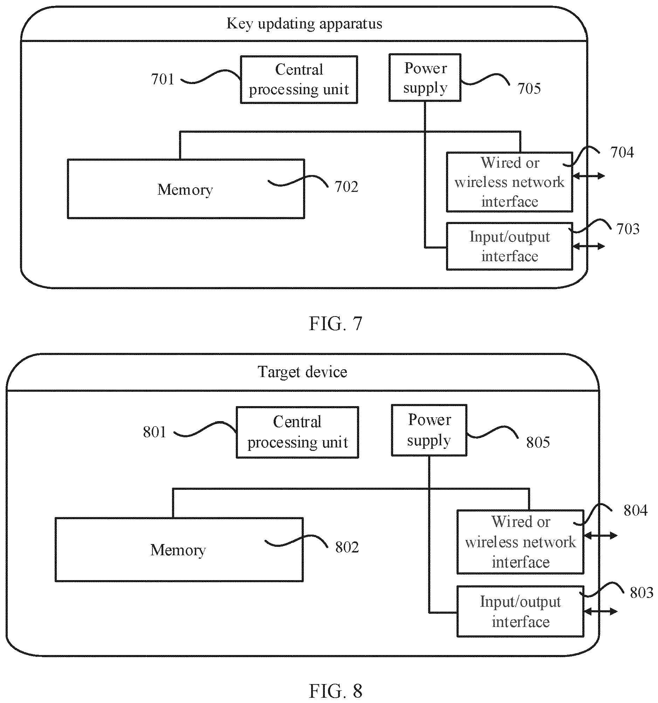

FIG. 7 is another schematic diagram of a structure of a key updating apparatus according to an embodiment of this application. As shown in FIG. 7, an embodiment of the apparatus in this embodiment of this application may include one or more central processing units 701, a memory 702, an input/output interface 703, a wired or wireless network interface 704, and a power supply 705.

The memory 702 may be temporary storage or persistent storage, and is configured to store a program and a scenario identification file. Further, the central processing unit 701 may be configured to be in communication with the memory 702, and perform, on the apparatus, a series of instruction operations in the memory 702.

In this embodiment, the central processing unit 701 may perform the method steps performed by the first server and the second server in the embodiment shown in FIG. 2, and details are not described herein again.

In this embodiment, specific functional module division in the central processing unit 701 may be similar to the division manner of unit modules such as the first processing module and the second processing module described in FIG. 5, and details are not described herein again.

FIG. 8 is another schematic diagram of a structure of a target device according to an embodiment of this application. As shown in FIG. 8, an embodiment of the apparatus in this embodiment of this application may include one or more central processing units 801, a memory 802, an input/output interface 803, a wired or wireless network interface 804, and a power supply 805.

The memory 802 may be temporary storage or persistent storage, and is configured to store a program and a scenario identification file. Further, the central processing unit 801 may be configured to be in communication with the memory 802, and perform, on the target device, a series of instruction operations in the memory 802.

In this embodiment, the central processing unit 801 may perform the method steps performed by the target device in the embodiment shown in FIG. 2, and details are not described herein again.

In this embodiment, specific functional module division in the central processing unit 801 may be similar to the division manner of unit modules such as the receiving module, the obtaining module, and the update module described in FIG. 6, and details are not described herein again.

An embodiment of this application further relates to a computer storage medium, including computer-readable instructions. When the computer-readable instructions are executed, the method steps performed by the first server, the second server, and the target device in the embodiment shown in FIG. 2 or FIG. 3 are implemented.

An embodiment of this application further relates to a computer program product including instructions. When the computer program product is run on a computer, the computer is enabled to perform the method steps performed by the first server, the second server, and the target device in the embodiment shown in FIG. 2 or FIG. 3.

An embodiment of this application further relates to a chip system. The chip system includes a processor configured to call a computer program or computer instructions stored in a memory, so that the processor performs the method steps performed by the first server, the second server, and the target device in the embodiment shown in FIG. 2 or FIG. 3.

In a possible implementation, the processor is coupled to the memory through an interface.

In a possible implementation, the chip system further includes a memory, and the memory stores a computer program or computer instructions.

An embodiment of this application further relates to a processor. The processor is configured to call a computer program or computer instructions stored in a memory, so that the processor performs the method steps performed by the first server, the second server, and the target device in the embodiment shown in FIG. 2 or FIG. 3.

The processor mentioned above may be a general-purpose central processing unit, a microprocessor, an application-specific integrated circuit (application-specific integrated circuit, ASIC), or one or more integrated circuits configured to control program execution of the key updating method in the embodiment shown in FIG. 2. The memory mentioned above may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The foregoing integrated unit may be implemented in a form of hardware, or may be implemented in a form of a software functional unit.

If the integrated unit is implemented in a form of a software functional unit and is sold or used as an independent product, the integrated unit may be stored in a computer-readable storage medium. Based on this understanding, the technical solutions of this application essentially, or a part that contributes to the conventional technology, or all or a part of the technical solutions may be embodied in a form of a software product. The computer software product is stored in a storage medium, and includes several instructions used to enable a computer device (which may be a personal computer, a server, a network device, or the like) to perform all or some of the steps of the method in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A key updating method, wherein the method comprises:

   sending a first request to a target device, wherein the first request is for obtaining a first identification number and a first identifier, and the first identification number is associated with the first identifier; and
   obtaining information of a first key corresponding to the first identifier, wherein the information of the first key indicates the target device to update the first key.

2. The method according to claim 1, wherein the method further comprises:

   obtaining, by a first server, a first check value and a second check value, wherein both the first check value and the second check value are generated based on the first key; and
   determining, when the first check value is the same as the second check value, that the first key is successfully updated.

3. The method according to claim 2, wherein the first check value is obtained by a second server through calculation based on the first key, and the second check value is obtained by the target device by updating the first key.

4. The method according to any one of claims 1 to 3, wherein the method further comprises:

obtaining, by the second server, a third check value, wherein the third check value is obtained by the target device in a process of obtaining the first identifier;

generating, when the first identifier exists in the second server and the first identifier is associated with the first identification number, a fourth check value based on the first key and the first identifier; and

maintaining, when the third check value is the same as the fourth check value, an association relationship between the first identifier and the first identification number.

5. The method according to any one of claims 1 to 3, wherein the method further comprises:

obtaining, by the second server, a third check value, wherein the third check value is obtained by the target device in a process of obtaining the first identifier;

generating, when the first identifier exists in the second server and the first identifier is associated with another identification number other than the first identification number, a fourth check value based on the first key and the first identifier; and

associating, when the third check value is the same as the fourth check value, the first identifier with the first identification number.

6. The method according to any one of claims 1 to 3, wherein the method further comprises:

obtaining, by the second server, a third check value, wherein the third check value is obtained by the target device in a process of obtaining the first identifier;

generating, when the first identifier does not exist in the second server, a fifth check value based on a preset second key and the first identifier, wherein the second key corresponds to a type of the target device; and

associating, when the third check value is the same as the fifth check value, the first identifier with the first identification number.

7. The method according to any one of claims 4 to 6, wherein the first key comprises one of the following:

a current MEK in a master ECU key MEK linked list;
the current MEK and a secure onboard communication key SK;
the current MEK and a digital device authentication key DK; and
the current MEK, the SK, and the DK.

8. The method according to claim 7, wherein the generating a fourth check value based on the first key and the first identifier comprises:
generating the fourth check value based on any MEK in the MEK linked list and the first identifier.

9. A key updating method, wherein the method comprises:

receiving a first request from a first server, wherein the first request is for obtaining a first identification number and a first identifier, and the first identification number is associated with the first identifier;
obtaining information of a first key corresponding to the first identifier; and
updating the first key based on the information of the first key.

10. The method according to claim 9, wherein the first key comprises one of the following:

a current MEK in a MEK linked list;
the current MEK and an SK;
the current MEK and a DK; and
the current MEK, the SK, and the DK.

11. A key updating apparatus, wherein the apparatus comprises:

a first processing module, configured to send a first request to a target device, wherein the first request is for obtaining a first identification number and a first identifier, and the first identification number is associated with the first identifier; and
a second processing module, configured to obtain information of a first key corresponding to the first identifier, wherein the information of the first key indicates the target device to update the first key.

**12.** The apparatus according to claim 11, wherein the first processing module is further configured to:

obtain a first check value and a second check value, wherein both the first check value and the second check value are generated based on the first key; and

determine, when the first check value is the same as the second check value, that the first key is successfully updated.

**13.** The apparatus according to claim 12, wherein the first check value is obtained by the second processing module through calculation based on the first key, and the second check value is obtained by the target device by updating the first key.

**14.** The apparatus according to any one of claims 11 to 13, wherein the second processing module is further configured to:

obtain a third check value, wherein the third check value is obtained by the target device in a process of obtaining the first identifier;

generate, when the first identifier exists in a second server and the first identifier is associated with the first identification number, a fourth check value based on the first key and the first identifier; and

maintain, when the third check value is the same as the fourth check value, an association relationship between the first identifier and the first identification number.

**15.** The apparatus according to any one of claims 11 to 13, wherein the second processing module is further configured to:

obtain a third check value, wherein the third check value is obtained by the target device in a process of obtaining the first identifier;

generate, when the first identifier exists in a second server and the first identifier is associated with another identification number other than the first identification number, a fourth check value based on the first key and the first identifier; and

associate, when the third check value is the same as the fourth check value, the first identifier with the first identification number.

**16.** The apparatus according to any one of claims 11 to 13, wherein the second processing module is further configured to:

obtain a third check value, wherein the third check value is obtained by the target device in a process of obtaining the first identifier;

generate, when the first identifier does not exist in a second server, a fifth check value based on a preset second key and the first identifier, wherein the second key corresponds to a type of the target device; and

associate, when the third check value is the same as the fifth check value, the first identifier with the first identification number.

**17.** The apparatus according to any one of claims 14 to 16, wherein the first key comprises one of the following:

a current MEK in a MEK linked list;
the current MEK and an SK;
the current MEK and a DK; and
the current MEK, the SK, and the DK.

**18.** The apparatus according to claim 17, wherein the second processing module is configured to generate the fourth check value based on any MEK in the MEK linked list and the first identifier.

**19.** A target device, wherein the target device comprises:

a receiving module, configured to receive a first request from a first server, wherein the first request is for obtaining a first identification number and a first identifier, and the first identification number is associated with the first identifier;

an obtaining module, configured to obtain information about a first key corresponding to the first identifier; and

an update module, configured to update the first key based on the information about the first key.

**20.** The apparatus according to claim 19, wherein the first key comprises one of the following:

a current MEK in a MEK linked list;
the current MEK and an SK;
the current MEK and a DK; and
the current MEK, the SK, and the DK.

21. A key updating apparatus, wherein the key updating apparatus comprises a memory and a processor, wherein the memory stores code, the processor is configured to execute the code, and when the code is executed, the key updating apparatus performs the method according to any one of claims 1 to 8.

22. A target device, wherein the target device comprises a memory and a processor, wherein
the memory stores code, the processor is configured to execute the code, and when the code is executed, the target device performs the method according to claim 9 or 10.

23. A computer storage medium, wherein the computer storage medium stores a computer program, and when the program is executed by a computer, the computer is enabled to implement the method according to any one of claims 1 to 10.

24. A computer program product, wherein the computer program product stores instructions, and when the instructions are executed by a computer, the computer is enabled to implement the method according to any one of claims 1 to 10.

| After-sales service center | Vehicle production center |
|---|---|

Second server

KMS server

Dealer server

OEM server

First server

Diagnostic instrument

Diagnostic instrument

Target device

ECU

ECU

FIG. 1

A key updating apparatus sends a first request to a target device, where the first request is for obtaining a first identification number and a first identifier, and the first identification number is associated with the first identifier

201

The key updating apparatus obtains information about a first key corresponding to the first identifier, where the information about the first key indicates the target device to update the first key

202

FIG. 2

Key updating apparatus

Target device

First server

Second server

301. First request, where the first request is for obtaining a first identification number and a first identifier

302. First identification number and first identifier

303. Second request including the first identification number and the first identifier

304. Associate the first identifier with the first identification number, and obtain a first key corresponding to the first identifier

305. Information about the first key

306. Information about the first key

307. Update the first key based on the information about the first key

FIG. 3

Traverse a database

Determine whether a UID of a target device exists in the database → No

Yes ↓

Determine whether the UID is associated with a VIN of a vehicle in which the target device is located → No

Yes ↓

Obtain a MEK linked list corresponding to the UID, and calculate the UID by using any MEK in the MEK linked list as an encryption key based on a CMAC algorithm, to obtain a MAC 2

Determine whether the MAC 2 is the same as a MAC 1 → No

Yes

Remove an association relationship between the UID and another VIN

Obtain a corresponding TK based on a type of the target device; and calculate the UID by using the TK as an encryption key based on a CMAC algorithm, to obtain a MAC 3

Determine whether the MAC 3 is the same as a MAC 1 → No

Yes

Report an error

Associate the UID with the VIN of the vehicle in which the target device is located

FIG. 4

Key updating apparatus

First processing module — 501

Second processing module — 502

FIG. 5

Target device

Receiving module — 601

Obtaining module — 602

Update module — 603

FIG. 6

FIG. 7

FIG. 8

**EP 4 329 240 A1**

## INTERNATIONAL SEARCH REPORT

| International application No. |
| --- |
| **PCT/CN2021/091653** |

### A. CLASSIFICATION OF SUBJECT MATTER

H04L 9/08(2006.01)i; G06F 21/60(2013.01)i

According to International Patent Classification (IPC) or to both national classification and IPC

### B. FIELDS SEARCHED

Minimum documentation searched (classification system followed by classification symbols)

H04L; G06F

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 密钥, 更新, 标识符, 识别码, 电子控制单元, 车辆, key, update, identifier, ECU, UID, VIN, vehicle

### C. DOCUMENTS CONSIDERED TO BE RELEVANT

| Category* | Citation of document, with indication, where appropriate, of the relevant passages | Relevant to claim No. |
| --- | --- | --- |
| Y | US 2019356477 A1 (FUJITSU LTD.) 21 November 2019 (2019-11-21) <br> description, paragraphs [0022]-[0098] and [0105]-[0109], and figures 1-7 | 1-24 |
| Y | US 2014114497 A1 (HITACHI AUTOMOTIVE SYSTEMS LTD.) 24 April 2014 (2014-04-24) <br> description, paragraphs [0056]-[0062], and figure 3 | 1-24 |
| A | CN 111480314 A (MICRON TECHNOLOGY INC.) 31 July 2020 (2020-07-31) <br> entire document | 1-24 |
| A | US 2019245691 A1 (KDDI CORP.) 08 August 2019 (2019-08-08) <br> entire document | 1-24 |
| A | US 2018227120 A1 (KDDI CORP.) 09 August 2018 (2018-08-09) <br> entire document | 1-24 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **04 January 2022** | **21 January 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/091653** |

| Patent document cited in search report | | | Publication date (day/month/year) | Patent family member(s) | | | Publication date (day/month/year) |
| --- | --- | --- | --- | --- | --- | --- | --- |
| US | 2019356477 | A1 | 21 November 2019 | US | 11171776 | B2 | 09 November 2021 |
| | | | | JP | WO2018142504 | A1 | 07 November 2019 |
| | | | | JP | 6693577 | B2 | 13 May 2020 |
| | | | | WO | 2018142504 | A1 | 09 August 2018 |
| US | 2014114497 | A1 | 24 April 2014 | JP | 2013017140 | A | 24 January 2013 |
| | | | | JP | 5479408 | B2 | 23 April 2014 |
| | | | | WO | 2013005730 | A1 | 10 January 2013 |
| | | | | DE | 112012002836 | T5 | 17 April 2014 |
| | | | | DE | 112012002836 | B4 | 01 July 2021 |
| | | | | US | 9132790 | B2 | 15 September 2015 |
| CN | 111480314 | A | 31 July 2020 | US | 2019187291 | A1 | 20 June 2019 |
| | | | | US | 11178133 | B2 | 16 November 2021 |
| | | | | WO | 2019125850 | A1 | 27 June 2019 |
| US | 2019245691 | A1 | 08 August 2019 | WO | 2018087963 | A1 | 17 May 2018 |
| | | | | CN | 109479000 | A | 15 March 2019 |
| | | | | US | 11082228 | B2 | 03 August 2021 |
| | | | | JP | 2018078484 | A | 17 May 2018 |
| | | | | JP | 6683588 | B2 | 22 April 2020 |
| | | | | EP | 3541006 | A1 | 18 September 2019 |
| | | | | EP | 3541006 | A4 | 24 June 2020 |
| | | | | IN | 201917000144 | A | 01 March 2019 |
| US | 2018227120 | A1 | 09 August 2018 | CN | 107925568 | A | 17 April 2018 |
| | | | | JP | 2017188959 | A | 12 October 2017 |
| | | | | EP | 3334085 | A1 | 13 June 2018 |
| | | | | EP | 3334085 | A4 | 20 March 2019 |
| | | | | JP | 2017034646 | A | 09 February 2017 |
| | | | | JP | 6178390 | B2 | 09 August 2017 |
| | | | | IN | 201847003981 | A | 09 February 2018 |
| | | | | WO | 2017022821 | A1 | 09 February 2017 |

Form PCT/ISA/210 (patent family annex) (January 2015)